# EUROPEAN PATENT SPECIFICATION

(11) **EP 1 389 048 B1**
(45) Date of publication and mention of the grant of the patent: **19.04.2006**
(21) Application number: 02735999.1
(22) Date of filing: 21.05.2002
(51) Int. Cl.: A23G 1/00, A23G 3/00

(54) **HOLLOW CHOCOLATE PRODUCT WITH OPENING AND RELEVANT ACCESSORIES**
SCHOKOLADENHOHLKÖRPER MIT ÖFFNUNG UND ZUBEHÖR
PRODUIT EN CHOCOLAT CREUX COMPRENANT UNE OUVERTURE ET DES ACCESSOIRES CORRESPONDANTS

(30) Priority: 21.05.2001 IT PG20010023; 23.11.2001 IT PI20010075; 23.11.2001 IT PI20010076; 04.01.2002 IT PI20020004
(43) Date of publication of application: 18.02.2004
(73) Proprietor: Milepi Perugia S.r.l., 06070 S. Mariano (PG) (IT)
(72) Inventor: CECCHINI, Marco, I-06124 Perugia (IT); PICCHIO, Elio, I-06129 S. Sisto (IT)
(74) Representative: Pizzoli, Pasquale Vincenzo
(86) International application number: PCT/IT2002/000330
(87) International publication number: WO 2002/094030

(56) References cited:
- EP-A- 0 890 316
- EP-A- 0 951 835
- EP-A- 1 018 302
- WO-A-01/35758
- WO-A-97/19604
- DE-A- 2 324 344
- DE-A- 3 913 824
- DE-A- 19 725 312
- DE-B- 1 297 454
- DE-C- 460 729
- DE-C- 19 736 608
- DE-U- 29 518 414

## Description

The present invention relates to a chocolate product with a closed inner cavity, such as an Easter egg, having at least one opening for inserting from outside amazing-articles that is preferably provided with a device for the one-way passing of an article.

At present chocolate products with a closed inner cavity, in particular the Easter eggs, are commercialized with an inside amazing article that the consumer often would like to be able to choose or, in any case, to personalize. For this reason many handicraft pastry-shops and small industries do usually personalize the Easter eggs by inserting therein before packaging the amazing article as desired by the consumer. This operation requires high costs as well as objective inconveniences for the consumer that is compelled to go to the selling place of personalizable eggs to deliver the amazing article and, afterwards, to collect the personalized and packed Easter egg.

An hollow body made up of single segments of chocolate which can be assembled in such a way to enclose therein a plurality of amazing articles is disclosed in DE 460729. However, this known hollow body is not made of a single piece of chocolate and does not allow the consumer to insert objects therein after it has been assembled.

The object of the present invention is therefore to provide a chocolate product with a closed inner cavity that is free from the above-mentioned drawbacks. This object is achieved by providing the chocolate product with an opening suitable for inserting one or more amazing objects inside the product, said opening being preferably provided with a seal to prevent the amazing articles inserted inside the product from coming out, which seal is in turn preferably unidirectionally accessible so as to allow the insertion of amazing articles into the product.

The main features of the chocolate product with a closed inner cavity according to the present invention are disclosed in claim 1, and other features are disclosed in the subsequent claims.

The advangages and features of the chocolate product with a closed inner cavity according to the present invention will be evident to those skilled in the art from the following detailed description of some embodiment thereof given with reference to the attached drawings, wherein:
- figure 1 shows a front view of an Easter egg provided with an opening in its middle part;
- figure 2 shows a sectional view along line A-A' of figure 1, with the opening provided with a seal;
- figure 3 shows an exploded perspective see-trough view of an Easter egg with a bottom opening and relevant fittings; and
- figure 4 shows a perspective view of the egg of figure 3 being packed and ready to be sold.

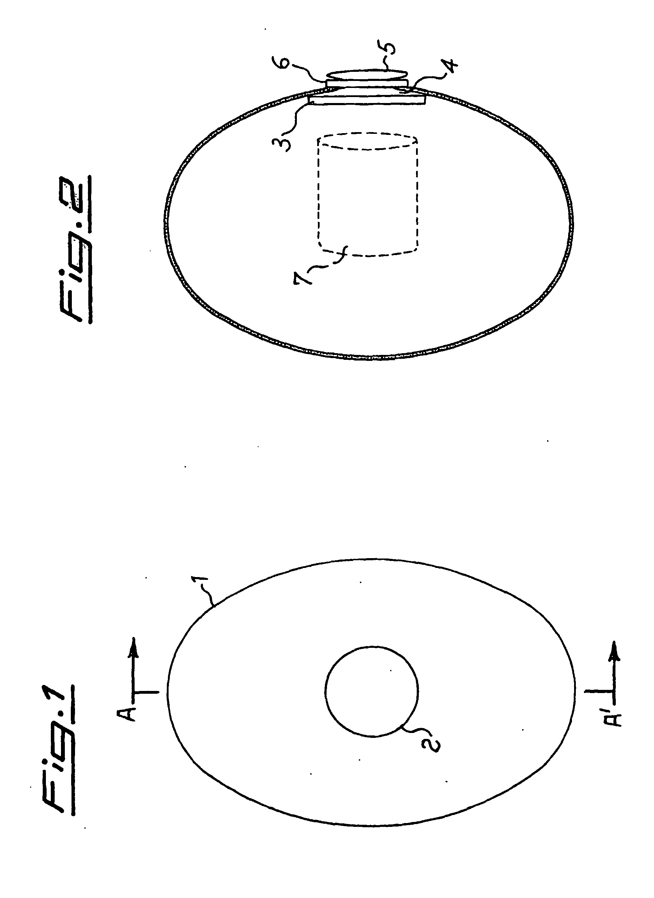

Referring to figure 1 there is shown that the chocolate product is an Easter egg with a completely closed inner cavity 1, which has in its middle part an opening 2 through which the consumer can insert inside the egg one or more amazing articles according to his preference. In this way he is able to offer the egg as a gift, after having suitably packed it, together with a personalized amazing article that is considered particularly appreciated by the person receiving the gift.

The company which manufactures and commercializes the Easter egg could consider it useful to strengthen the edges of opening 2 in order to prevent an undesired breakage of said edges. These strengthening aids can be made with different shapes or materials.

Referring to figure 2, there is shown in section the same egg of figure 1 wherein the opening 2 is already provided with means for strengthening the edges of opening 2. These means consist of an annular element 3 to be applied inside the egg and which is provided with a frustoconical appendix 4 ending in turn with a cylindrical projection 5 which protrudes from the egg. On this cylindrical projection a second annular element 6 is inserted which is mounted in contact with opening 2. In this way the edges of opening 2, clamped between the conical appendix 4 of annular element 3 and annular element 6, have been duly strengthened.

Cylindrical appendix 5 may be closed by a plug after inserting the amazing article into the egg. This plug can be shaped in such a way as to constitute also the base support of the egg so to lay it in a horizontal position.

In figure 2 there is also shown by dotted lines a container 7 already inserted in the egg. This container encloses inside the amazing article and aids in preventing it from coming in contact with the chocolate that forms the egg. This container, as well as the plug, can be delivered to the consumers together with the egg and both annular elements 3 and 6, the latter being possibly already mounted on the egg. The consumer will thus be able to insert the personalized amazing - article into the egg and to pack the egg in a personalized way too.

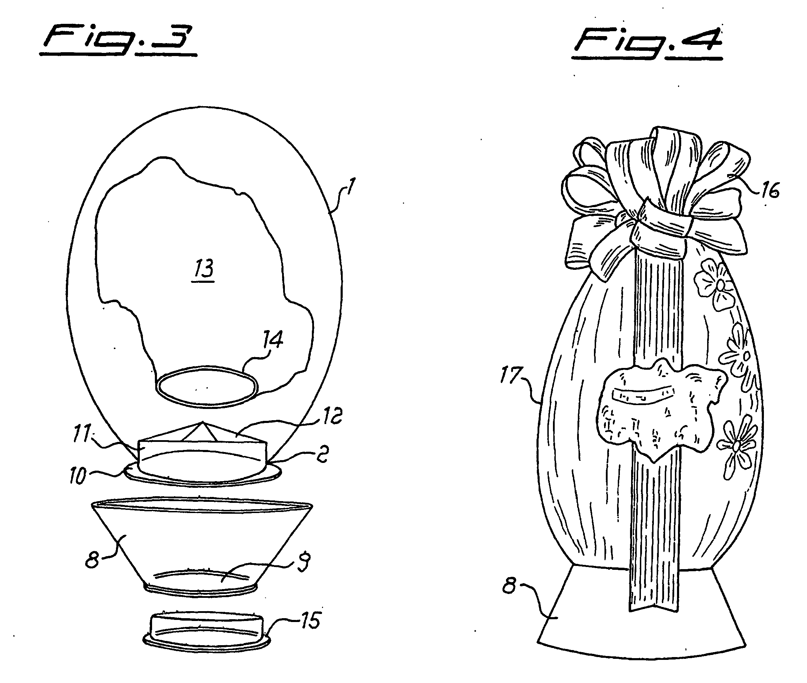

Referring now to fig. 3 there is shown how a chocolate egg according to the present invention can be realized in such a way that it may be commercialized with the same appearance of traditional eggs. The egg with closed inner cavity 1 has opening 2 that matches with the base cusp so as to correspond to a frustoconical support 8 shaped as the traditional ones, but provided with an opening 9 for the passage of the amazing article to be inserted inside the egg through opening 2. In the figure the frustoconical support 8 is arranged with the larger base turned upwards, but it can obviously be overturned as shown in fig. 4.

Opening 2 is equipped with closing means which prevent the amazing articles inserted in the egg from coming out, but allow anyhow to introduce said articles into the egg. These means are essentially formed by an annular element 10 suited to act also as a stiffening of opening 2, which element is provided with a cylindrical appendix 11 designed to be introduced inside the egg. Cylindrical appendix 11 ends with a lamellar diaphragm 12 structured in such a way as to be accessible in one direction only, i.e. the one directed towards the inner of the egg. In this way diaphragm 12 allows insertion of amazing articles inside the egg, but prevents them from coming out after they have been inserted therein.

In figure there is also shown an additional fitting constituted by a small bag made of flexible material 13 provided with a mouth 14 suited to be secured at opening 2 and/or diaphragm 12. The bag 13 of flexible material, apart from receiving one or more amazing articles, aids in completely isolating from outside the inner walls of the egg.

In its preferred embodiment, support 8 is provided with a bottom 15 to be inserted in opening 9 in order to make the support totally similar to the ones of traditional eggs. The consumer, after having bought the packed egg, will be able to remove bottom 15, to insert inside the egg the personalized amazing article and then to apply again bottom 15 to support 8.

In figure 4 there is shown as an Easter egg realized according to the present invention will appear to the consumer. Such an egg lays on support 8 on which the ends of ornamental ribbon are pasted which form the bow 16 of a traditional type and look. The egg is wrapped by a wrap 17 of a traditional type, but provided with an imperceptible opening located at opening 2 of the egg and opening 9 of support 8. Since support 8 is provided with bottom 15, when the latter is closed it is impossible to see the difference between the egg according to the present invention and the traditional ones. The wrap sheet 17 according to the present invention has the opening strengthened and this can be obtained through a proceeding according to which the strengthening is first applied to the sheet and then the opening is worked. The strengthening aids in preventing the sheet from accidental tearing and can even be realized without any type of outer addition, but only through sheet thickening in that point. According to a preferred variation, the opening on the wrap sheet can be subsequently closed by a seal having a lesser thickness than the sheet so as to be easily broken during packaging of the product or subsequently by the consumer himself.

Also in realizing other fittings of the Easter egg according to the present invention choices and variations are possible. For example, opening 2 can be made after molding of the chocolate egg or may be planned during the molding phase by using appropriate moulds.

The reinforcement of opening 2 can have different shapes depending on where it is placed and can possibly be secured inside the egg through an anchoring mechanism of a known type.

Support 8, apart from having a bearing function and allowing the passage of the amazing article, can even contribute to prevent the egg from an accidental breakage in that it can have a larger bearing surface for it.

Also the unidirectionally accessible closing device can be realized in different ways from that shown in figure 3. lnstead of the diaphragm with mating blades, in fact, a unidirectionally flexible disk cover or a cover with opposed blades can be used for example.

The present invention has been described and illustrated with reference to an embodiment being an Easter egg, but it can be applied to any other chocolate product of any shape, for example rabbit-shaped, and provided with a closed inner cavity suitable to receive amazing articles.

## Claims

1. A chocolate product with a closed inner cavity (1) having at least one opening (2) suited for introducing one or more amazing articles inside said cavity (1), said opening (2) being provided with closing means, **characterized in that** said closing means (10, 11, 12) are unidirectionally accessible towards the inside of the cavity (1) only.

2. A chocolate product according to claim 1 **characterized in that** said opening (2) is provided with strengthening means (3, 4, 6, 10, 11) suited to protect the edges thereof without obstructing it.

3. A chocolate product with a closed inner cavity (1) according to claim 1 or 2 **characterized in that** it is provided with a support (8) having an opening (9) suited for the passage of amazing articles.

4. A chocolate product with a closed inner cavity (1) according to claim 3 **characterized in that** the opening (9) is provided with a bottom (15) to close it.

5. A chocolate product with a closed inner cavity (1) according to one or several previous claims, **characterized in that** it is internally provided with an insulating container (7, 13) suited to insulate the chocolate from the amazing article and outer environment.

6. A chocolate product with a closed inner cavity (1) according to one or several previous claims, **characterized in that** it is wrapped with a wrap sheet (17) having at least an opening fitted for introducing amazing articles inside the wrapped product.

7. A chocolate product with a closed inner cavity (1), comprising at least an opening (2) and closing means **characterized in that** said closing means (3, 4, 6, 10, 11) are fitted for the unidirectional passage of amazing articles towards the inside of the cavity (1), said chocolate product further comprising strengthening means (3, 4, 6, 10, 11) for the opening (2), a support (8) with an opening (9) located at the opening (2) and closeable by a bottom (15), a wrap sheet (17) with an opening located at the openings (2) and (9).

## Patentansprüche

1. Schokoladenprodukt mit einer geschlossenen inneren Kavität (1) mit wenigstens einer Öffnung (2), welche geeignet ist, eine oder mehrere Überraschungsartikel in die Kavität (1) einzuführen, wobei die Öffnung (2) mit einer Verschlußeinrichtung versehen ist, **dadurch gekennzeichnet, daß** die Verschlußeinrichtung (10, 11, 12) unidirektionale ist und nur in Richtung der Innenseite der Kavität (1) zugängig ist.

2. Schokoladenprodukt gemäß Anspruch 1, **dadurch gekennzeichnet, daß** die Öffnung (2) mit Verstärkungseinrichtungen (3, 4, 6, 10, 11) versehen ist, um die Kanten zu schützen, ohne diese zu versperren.

3. Schokoladenprodukt mit einer geschlossenen inneren Kavität (1) gemäß einem der Ansprüche 1 oder 2, **dadurch gekennzeichnet, daß** es mit einer Abstützung (8) ausgerüstet ist, welche eine Öffnung (9) aufweist, die für den Durchgang von Überraschungsartikeln geeignet ist.

4. Schokoladenprodukt mit einer geschlossenen inneren Kavität (1) gemäß Anspruch 3, **dadurch gekennzeichnet, daß** die Öffnung (9) mit einem Boden (15) ausgerüstet ist, um sie zu verschließen.

5. Schokoladenprodukt mit einer geschlossenen inneren Kavität (1) gemäß einem oder mehreren der vorherigen Ansprüche, **dadurch gekennzeichnet, daß** es intern mit einem lsoliercontainer (7, 13) versehen ist, welcher geeignet ist, die Schokolade von den Überraschungsartikeln und der äußeren Umgebung zu isolieren.

6. Schokoladenprodukt mit einer geschlossenen inneren Kavität (1) gemäß einem oder mehreren der vorherigen Ansprüche, **dadurch gekennzeichnet, daß** es in ein Packpapier (17) eingepackt ist, welches wenigstens eine Öffnung zur Einführung von Überraschungsartikeln in das verpackte Produkt aufweist.

7. Schokoladenprodukt mit einer geschlossenen inneren Kavität (1), aufweisend wenigstens eine Öffnung (2) und eine Verschlußeinrichtung, **dadurch gekennzeichnet, daß** die Verschlußeinrichtung (3, 4, 6, 10, 11) einen unidirektionalen Durchgang von Überraschungsartikefn ins Innere der Kavität (1) ermöglicht, das Schokoladenprodukt des weiteren eine Verstärkungsvorrichtung (3, 4, 6, 10, 11) für die Öffnung (2), eine Abstützung (8) mit einer Öffnung (9) lokalisiert bei der Öffnung (2) und verschließbar durch einen Boden (15), und ein Packpapier (17) mit einer Öffnung lokalisiert an den Öffnungen (2) und (9) aufweist.

## Revendications

1. Produit de chocolat comportant une cavité interne fermée (1) ayant au moins une ouverture (2) appropriée pour introduire un ou plusieurs articles-surprise à l'intérieur de ladite cavité (1), ladite ouverture (2) étant munie de moyens de fermeture **caractérisé en ce que** lesdits moyens de fermeture sont unidirectionnelle (10, 11, 12) et accessibles uniquement vers l'intérieur de la cavité (1).

2. Produit de chocolat selon la revendication 1, **caractérisé en ce que** ladite ouverture (2) est munie de moyens de renforcement (3, 4, 6, 10, 11) appropriés pour protéger les bords de celle-ci sans l'obstruer.

3. Produit de chocolat comportant une cavité interne fermée (1) selon la revendication 1 ou 2, **caractérisé en ce qu'**il est muni d'un support (8) présentant une ouverture (9) appropriée pour le passage d'articles-surprise.

4. Produit de chocolat comportant une cavité interne fermée (1) selon la revendication 3, **caractérisé en ce que** l'ouverture (9) est munie d'un fond (15) pour la fermer.

5. Produit de chocolat comportant une cavité interne fermée (1) selon une ou plusieurs des revendications précédentes, **caractérisé en ce qu'**il est muni en interne d'un conteneur isolant (7, 13) approprié pour isoler le chocolat de l'article surprenant et de l'environnement extérieur.

6. Produit de chocolat comportant une cavité interne fermée (1) selon une ou plusieurs des revendications précédentes, **caractérisé en ce qu'**il est enveloppé d'une feuille d'emballage (17) comportant au moins une ouverture prévue pour introduire des articles-surprise à l'intérieur du produit emballé.

7. Produit de chocolat comportant une cavité interne fermée (1), comportant au moins une ouverture (2) et des moyens de fermeture, **caractérisé en ce que** lesdits moyens de fermeture (3, 4, 6, 10, 11) sont adaptés au passage unidirectionnel d'articles-surprise vers l'intérieur de la cavité (1), ledit produit de chocolat comprenant en outre des moyens de renforcement (3, 4, 6, 10, 11) de l'ouverture (2), un support (8) présentant une ouverture (9) située au niveau de l'ouverture (2) et pouvant être fermée par un fond (15) et une feuille d'emballage (17) comportant une ouverture située au niveau des ouvertures (2) et (9).
